# EUROPÄISCHE PATENTANMELDUNG

(11) **EP 3 284 960 A1**
(43) Veröffentlichungstag der Anmeldung: **21.02.2018**
(21) Anmeldenummer: 17185955.6
(22) Anmeldetag: 11.08.2017
(51) Int. Cl.: F16B 37/04, F16B 39/10, F16B 41/00, F16B 37/06

(54) **STAHLBAUTEIL FÜR EINE WINDENERGIEANLAGE UND WINDENERGIEANLAGE MIT STAHLBAUTEIL**

(30) Priorität: 19.08.2016 DE 102016215613
(71) Anmelder: innogy SE, 45128 Essen (DE)
(72) Erfinder: Daum, Karlheinz, 67133 Maxdorf (DE)
(74) Vertreter: Kierdorf Ritschel Richly

(57) **Zusammenfassung**

Stahlbauteil (2) für eine Windenergieanlage (50),
- mit einem Stahlgrundkörper (4),
- mit einer Vorrichtung (6, 28, 34) zum Sichern von Schrauben (40) und/oder Muttern (10) und
- mit wenigstens einer Schraube und/oder wenigstens einer Mutter mit einer Festigkeitsklasse von 8.8 oder höher
- wobei die Vorrichtung (6) zum Sichern von Schrauben und/oder Muttern ein Stahlgehäuse (8, 26, 36) hat,
- wobei das Stahlbauteil (2) dazu eingerichtet ist, mit einem Anbauteil (42) der Windenergieanlage (50) verschraubt zu werden,
- wobei das Stahlgehäuse (8, 26, 36) der Vorrichtung zum Sichern von Schrauben (40) und/oder Muttern (10) mit dem Stahlgrundkörper (4) verschweißt ist,
- wobei ein Schraubenkopf der wenigstens einen Schraube (40) und/oder die wenigstens eine Mutter (10) in dem Stahlgehäuse formschlüssig, verdrehsicher und verliersicher aufgenommen ist und
- wobei das Stahlgehäuse eine Öffnung (16) aufweist, die zum Durchstecken eines Schraubenschafts (44) vorgesehen ist.

## Beschreibung

Die vorliegende Erfindung betrifft ein Stahlbauteil für eine Windenergieanlage und eine Windenergieanlage mit einem solchen Stahlbauteil.

Beim Errichten von Windenergieanlagen, insbesondere Offshore-Windenergieanlagen, ist es erforderlich, Bauteile der Windenergieanlage temporär oder dauerhaft mit Schraube und Mutter miteinander zu verbinden. Dabei werden häufig Schrauben und Muttern mit einer Festigkeitsklasse von 8.8 oder höher eingesetzt, die, um eine betriebssichere Schraubenverbindung herzustellen, nicht an die zu verbindenden Bauteilen angeschweißt werden dürfen.

Bei der Montage ergibt sich das Problem, dass der Monteur Schraube und Mutter halten, führen und verbinden muss, wobei die zu verschraubenden Bauteile oft nicht oder nur schwer von zwei Seiten zugänglich sind. Es ist daher nicht oder nur schwer möglich, eine Schraube oder eine Mutter anzuhalten und das entsprechende Gegenstück gleichzeitig ein- oder aufzudrehen.

Beispielsweise ist es bei vorbekannten, umfangsseitig geschlossenen Stahlbauteilen für Windenergieanlagen, die nur einseitig von außen zugänglich ist, nicht möglich, ein Anbauteil mit Schraube und Mutter anzuschrauben. Wie voranstehend bereits erwähnt, ist ein Anschweißen der Schraube oder der Mutter ab einer Festigkeitsklasse von 8.8 nicht zulässig, so dass eine Schraube oder Mutter nicht durch eine Schweißverbindung an dem Stahlbauteil befestigt werden kann. Auch ein Ersetzen der Mutter durch Schneiden eines Muttergewindes in dem Stahlbauteil erfüllt in der Regel nicht die geforderten Festigkeitswerte.

Der vorliegenden Erfindung liegt daher die technische Problemstellung zugrunde, ein Stahlbauteil für eine Windenergieanlage anzugeben, welches die voranstehend beschriebenen Nachteile nicht oder zumindest in geringerem Maße aufweist und insbesondere in einfacher Weise mit einem Anbauteil mittels Schraube und Mutter verschraubt werden kann. Weiter soll eine Windenergieanlage mit einem solchen Stahlbauteil angegeben werden.

Die voranstehend beschriebene technische Problemstellung wird gelöst durch ein Stahlbauteil nach Anspruch 1 und eine Windenergieanlage nach Anspruch 10. Vorteilhafte Ausgestaltungen der Erfindung ergeben sich aus den abhängigen Ansprüchen und der nachstehenden Beschreibung.

Gemäß einem ersten Aspekt betrifft die Erfindung ein Stahlbauteil für eine Windenergieanlage, mit einem Stahlgrundkörper, mit einer Vorrichtung zum Sichern von Schrauben und/oder Muttern und mit wenigstens einer Schraube und/oder wenigstens einer Mutter, wobei die Vorrichtung zum Sichern von Schrauben und/oder Muttern ein Stahlgehäuse hat, wobei die wenigstens eine Schraube und/oder die wenigstens eine Mutter eine Festigkeitsklasse von 8.8 oder höher aufweist, wobei das Stahlbauteil dazu eingerichtet ist, mit einem Anbauteil der Windenergieanlage verschraubt zu werden, wobei das Stahlgehäuse der Vorrichtung zum Sichern von Schrauben und/oder Muttern mit dem Stahlgrundkörper verschweißt ist, wobei ein Schraubenkopf der wenigstens einen Schraube und/oder die wenigstens eine Mutter in dem Stahlgehäuse formschlüssig, verdrehsicher und verliersicher aufgenommen ist und wobei das Stahlgehäuse eine Öffnung aufweist, die zum Durchstecken eines Schraubenschafts vorgesehen ist.

Dadurch, dass die wenigstens eine Schraube und/oder die wenigstens eine Mutter bereits mithilfe der Vorrichtung zum Sichern von Schrauben und/oder Muttern an dem Stahlgrundkörper des Stahlbauteils gehalten ist, kann in einfacher Weise eine Schraubenverbindung zu dem Anbauteil hergestellt werden. Dabei muss der Monteur lediglich diejenige Schraube oder Mutter halten, führen und verschrauben, welche das Gegenstück zu der Schraube oder Mutter bildet, die in dem Stahlgehäuse der Vorrichtung zum Sichern von Schrauben und/oder Muttern aufgenommen ist. So kann eine Montage des Anbauteils an dem Stahlbauteil erfolgen, ohne dass eine zweiseitige Zugänglichkeit des Stahlbauteils erforderlich ist.

Ist das Stahlbauteil ein Teil einer Turm- oder Maststruktur einer Windenergieanlage, kann das Anbauteil nachträglich somit an dem Turm oder Mast montiert werden, d.h. nachdem der Turm oder Mast bereits ganz oder zumindest teilweise errichtet worden ist. Es ist folglich möglich, Anbauteile nachträglich an einem bereits ganz oder teilweise errichteten Mast oder Turm anzubringen, die vormals aufgrund der im montierten Zustand fehlenden zweiseitigen Zugänglichkeit der Stahlbauteile bereits vor dem Errichten des Turms an einem jeweiligen Stahlbauteil angeschraubt oder angeschweißt werden mussten.

Für den Fall, dass eine Schraube in dem Stahlgehäuse aufgenommen ist, ragt ihr Schaft durch die Öffnung des Stahlgehäuses, so dass ein Anbauteil mit einer Durchgangsöffnung oder einer Ausnehmung auf den Schaft aufgefädelt oder entlang des Schafts geführt werden kann. Dadurch wird die Montage des Anbauteils erleichtert. Eine Mutter kann dann auf den Schaft aufgeschraubt werden, wobei ein definiertes Drehmoment für die Schraubenverbindung vorgesehen sein kann.

Für den Fall, dass eine Mutter in dem Stahlgehäuse aufgenommen ist, kann ein Schaft einer Schraube durch die Öffnung des Stahlgehäuses geführt und mit der Mutter verschraubt werden, wobei ein definiertes Drehmoment für die Schraubenverbindung vorgesehen sein kann.

Es kann in einfacher Weise eine normgerechte Schraubenverbindung für Schrauben und/oder Muttern der Festigkeitsklasse 8.8 oder höher erreicht werden.

Das Stahlgehäuse der Vorrichtung zum Sichern von Schrauben und/oder Muttern ist mit dem Stahlgrundkörper verschweißt. Insbesondere kann die Verschweißung des Stahlgrundkörpers mit dem Stahlgehäuse artgleich erfolgen. So kann eine Schweißverbindung mit hoher Festigkeit zwischen dem Stahlgehäuse und dem Stahlgrundkörper hergestellt werden.

Der Stahlgrundkörper und das Stahlgehäuse können aus Edelstahl hergestellt sein. Dabei kann es sich beispielsweise um V2A- oder V4A-Stahl handeln. Grundsätzlich kann es sich bei dem Stahlbauteil um ein Bauteil handeln, das aus einem Stahl hergestellt ist, der für Offshore-Windenergieanlagen geeignet ist. Beispielsweise kann es sich dabei um einen S355NL, S355ML oder um einen S460 oder S690 oder dergleichen handeln.

"Formschlüssig und verdrehsicher" bedeutet vorliegend, dass ein Dreh- oder Anzugsmoment beim Herstellen der Schraubenverbindung gegen das Stahlgehäuse abgestützt wird.

"Verliersicher" bedeutet vorliegend, dass eine in dem Stahlgehäuse aufgenommene wenigstens eine Schraube und/oder wenigstens eine Mutter nicht schwerkraftbedingt aus dem Stahlgehäuse herausfallen kann.

Die wenigstens eine Schraube und/oder wenigstens eine Mutter ist daher derart an dem Stahlbauteil befestigt, dass während der Montage kein Halten oder Führen der Schraube oder Mutter durch einen Monteur erforderlich ist.

Der Schraubenkopf kann als Innensechskant ausgebildet sein. Das Stahlgehäuse kann einen Adapterzapfen aufweisen, der an den Innensechskant angepasst ist und in den Innensechskant eingreift, um die Schraube formschlüssig und verdrehsicher aufzunehmen. Der Adapterzapfen kann mit einem Ende in den Innensechskant eingreifen und mit einem entgegengesetzten Ende an dem Stahlgehäuse befestigt sein. Der Adapterzapfen kann lösbar oder unlösbar mit dem Stahlgehäuse verbunden sein. Der Adapterzapfen kann in das Stahlgehäuse eingesteckt sein.

Gemäß einer Weiterbildung ist vorgesehen, dass der Schraubenkopf der wenigstens einen Schraube und/oder die wenigstens eine Mutter eine Außenkontur hat, wie einen Außenvierkant, einen Außensechskant oder dergleichen, und dass das Stahlgehäuse wenigstens einen Anlageabschnitt aufweist, der die Außenkontur umfangsseitig zumindest abschnittsweise umgreift, so dass beim Herstellen einer Schraubenverbindung ein Drehmoment über die Außenkontur gegen das Stahlgehäuse abgestützt wird.

Das Stahlgehäuse ist demnach zumindest abschnittsweise an die Form des Schraubenkopfs der wenigstens einen Schraube und/oder der wenigstens einen Mutter angepasst. So können in kostengünstiger Weise konventionelle, genormte Muttern oder Schrauben mit dem Stahlbauteil verwendet werden.

Neben Sechskant- oder Vierkantschrauben, bzw. Sechskant- oder Vierkantmuttern, können auch andere Muttern- oder Schraubenformen eingesetzt werden, wobei ein Anlageabschnitt des Stahlgehäuses derart an eine Außenkontur des Schraubenkopfs oder der Mutter angepasst ist, dass sich beim Herstellen der Schraubenverbindung ein Drehmoment gegen das Stahlgehäuse abstützt. Beispielsweise kann eine Flügelmutter, eine Bundmutter oder eine Bundschraube in dem Stahlgehäuse gehalten sein.

Nach einer weiteren Ausgestaltung ist vorgesehen, dass das Stahlgehäuse wenigstens zwei Anlageabschnitte aufweist, wobei die Anlageabschnitte insbesondere spiegelsymmetrisch zu einer Mittenebene angeordnet sind.

Das Stahlgehäuse kann genau zwei oder mehr als zwei Anlageabschnitte aufweisen, um den Schraubenkopf der wenigstens einen Schraube und/oder die wenigstens eine Mutter umfangsseitig zumindest abschnittsweise formschlüssig einzufassen. So kann eine zuverlässige Sicherung des Schraubenkopfs der wenigstens einen Schraube und/oder der wenigstens einen Mutter gegen ein Verdrehen gewährleistet werden.

Mit einer symmetrischen Ausgestaltung der Anlageabschnitte kann eine homogene Belastung des Stahlbauteils beim Verbinden mit einem Anbauteil erreicht werden.

Nach einer Weiterbildung des Stahlbauteils ist vorgesehen, dass das Stahlgehäuse einstückig aus einem Stahlblech hergestellt ist, insbesondere durch Laserschneiden und anschließendes Kanten. Das Stahlgehäuse kann daher kostengünstig hergestellt und individuell an die Größe und Form des Schraubenkopfs oder der Mutter angepasst sein.

Alternativ kann das Stahlgehäuse aus zwei oder mehr Teilen zusammengesetzt sein, wobei insbesondere wenigstens zwei Bleche zumindest abschnittsweise stoffschlüssig miteinander verbunden sind, insbesondere miteinander verschweißt sind. So können beispielsweise ein dem Stahlgrundkörper abgewandtes Front- oder Deckblech, das die Öffnung umfasst, und ein dem Stahlgrundköper zugeordnetes Zwischenblech, dass eine Aufnahme zum Aufnehmen des Schraubenkopfs der wenigstens einen Schraube und/oder der wenigstens einen Mutter aufweist, vorgesehen sein. Das Zwischenblech kann mit dem Stahlgrundkörper verschweißt sein. Das Zwischenblech kann mit dem Front- oder Deckblech verschraubt, verklebt oder verschweißt sein, also lösbar oder unlösbar verbunden sein. Auf diese Weise kann ein Stahlgehäuse ohne Umformvorgänge bereitgestellt werden.

Das Stahlgehäuse kann ein Stahlprofil sein. Ein solches Stahlprofil kann beispielsweise durch Strangpressen hergestellt worden sein. So kann das Stahlgehäuse kostengünstig und in hoher Stückzahl gefertigt werden.

Zur Verdrehsicherung der wenigstens einen Schraube bzw. des Schraubenkopfs und/oder der wenigstens einen Mutter kann das Stahlprofil eine Nut aufweisen, die den Schraubenkopf und/oder die Mutter umfangsseitig wenigstens zweiseitig derart einfasst, dass ein Verdrehen des Schraubenkopfs und/oder der Mutter um ihre Längsachse verhindert wird. Die Nut kann zudem zur axialen Sicherung des Schraubenkopfs und/oder der Muttern dienen, d.h. zur Sicherung entgegen einem Verschieben entlang der Längsachse der Schraube oder Mutter. Wenn vorliegend von einer Längsachse der Schraube oder Mutter gesprochen wird, so handelt es sich dabei um eine zentrale Schraubenachse, um die beim Befestigen der Schraube oder Mutter eine Rotation der Schraube oder Mutter stattfindet und die von dem jeweiligen Gewinde umfangsseitig umschlossen ist.

Nach einer weiteren Ausgestaltung ist vorgesehen, dass ein Gewinde der wenigstens einen Schraube und/oder der wenigstens einen Mutter ein metrisches ISO-Regelgewinde oder ein metrisches ISO-Feingewinde in einem Bereich von einschließlich M16 bis M80 ist. Mithilfe des Stahlbauteils kann daher eine hochfeste Schraubenverbindung für hohe statische und dynamische Lasten zu dem Anbauteil hergestellt werden. Es versteht sich, dass eine Mehrzahl von Verschraubungen zu dem Anbauteil vorgesehen sein können.

Nach einer weiteren Ausgestaltung des Stahlbauteils ist vorgesehen, dass das Stahlgehäuse den Schraubenkopf der wenigstens einen Schraube und/oder die wenigstens eine Mutter zur formschlüssigen, axialen Verliersicherung wenigstens im Bereich einer der Öffnung zugewandten Stirnseite stirnseitig zumindest abschnittsweise umgreift. Es kann daher nicht nur eine formschlüssige Verbindung zur Abstützung von Drehmomenten beim Verschrauben vorgesehen sein, sondern auch eine formschlüssige Verbindung zur axialen Fixierung bzw. Sicherung der wenigstens einen Schraube bzw. des Schraubenkopfs und/oder der wenigstens einen Mutter in dem Stahlgehäuse. So lässt sich in kostengünstiger Weise eine axiale Position des Schraubenkopfs oder der Mutter in dem Stahlgehäuse festlegen.

Entsprechend einer weiteren Ausgestaltung des Stahlbauteils ist vorgesehen, dass der Schraubenkopf der wenigstens einen Schraube und/oder die wenigstens eine Mutter zur axialen Verliersicherung in das Stahlgehäuse eingeklebt ist. Alternativ oder ergänzend kann der Schraubenkopf der wenigstens einen Schraube und/oder die Mutter zur axialen Verliersicherung kraftschlüssig in dem Stahlgehäuse gehalten ist. Beispielsweise kann der Schraubenkopf der wenigstens einen Schraube und/oder die wenigstens eine Mutter in das Stahlgehäuse eingepresst sein und/oder mit einem Klebstoff mit dem Stahlgehäuse verklebt sein. So kann in kostengünstiger Weise eine Fixierung des Schraubenkopfs der wenigstens einen Schraube und/oder der wenigstens einen Mutter an dem Stahlbauteil erfolgen.

Es kann vorgesehen sein, dass sich die Verklebung löst bzw. zerstört wird, sobald ein Drehmoment zum Herstellen einer Schraubenverbindung zu dem Anbauteil in die durch Verkleben gegen Verlieren gesicherte wenigstens eine Schraube und/oder wenigstens eine Mutter eingeleitet wird. Die Abstützung des Drehmoments während des Herstellens der Schraubenverbindung erfolgt weiterhin über das Stahlgehäuse. Weiter kann eine zumindest abschnittsweise, stirnseitige, formschlüssige Anlage des Schraubenkopfs der wenigstens einen Schraube und/oder der wenigstens einen Mutter zu dem Stahlgehäuse gebildet sein.

Das Stahlbauteil kann, je nach Lochbild des zu befestigenden Anbauteils, seinerseits ein an das Anbauteil angepasstes Lochbild aufweisen.

Das Stahlbauteil kann zum Verschrauben mit mehreren Anbauteilen eingerichtet sein.

Nach einer weiteren Ausgestaltung des Stahlbauteils vorgesehen, dass eine Mehrzahl von Schrauben und/oder Muttern in dem Stahlgehäuse gehalten sind, wobei die Schrauben und/oder Muttern insbesondere gitterartig, kreisförmig, kreisbogenförmig oder linear verteilt angeordnet sind. Alternativ oder ergänzend weist die Vorrichtung zum Sichern von Schrauben und/oder Muttern eine Mehrzahl von Stahlgehäusen auf, die mit dem Grundkörper verschweißt sind.

In einem Stahlgehäuse können Schrauben und/oder Muttern aufgenommen sein.

Zusammen mit einer Schraube und/oder einer Mutter kann eine Unterlegscheibe in dem Stahlbauteil gehalten sein.

Gemäß einem zweiten Aspekt betrifft die Erfindung eine Windenergieanlage, mit einer Tragstruktur, mit einer Gondel, mit einem Rotor, mit einem Stahlbauteil und mit einem Anbauteil, wobei die Tragstruktur die Gondel und den Rotor trägt, wobei das Stahlbauteil erfindungsgemäß ausgebildet ist und wobei das Stahlbauteil mit dem Anbauteil verschraubt ist.

Durch das Vorsehen eines oder mehrerer erfindungsgemäßer Stahlbauteile wird die Montage der Windenergieanlage vereinfacht. So können Anbauteile einfacher und insbesondere nachträglich montiert werden.

Beispielsweise kann das Stahlbauteil ein Teil der Tragstruktur sein, wie ein Teil einer Turmkonstruktion bzw. eines Mastes der Windenergieanlage oder dergleichen. Bei der Windenergieanlage kann es sich um eine Offshore-Windenergieanlage handeln. Es versteht sich, dass erfindungsgemäße Stahlbauteile alternativ oder ergänzend im Bereich der Gondel oder des Rotors eingesetzt werden können.

Nachfolgend wird die Erfindung anhand einer Ausführungsbeispiele darstellenden Zeichnung näher beschrieben. Es zeigen jeweils schematisch:
Fig. 1 ein Stahlbauteil in einer Frontansicht;
Fig. 2 die Vorrichtung zum Sichern von Schrauben und/oder Muttern aus Fig. 1;
Fig. 3 eine weitere Ausgestaltung einer Vorrichtung zum Sichern von Schrauben und/oder Muttern;
Fig. 4 eine weitere Ausgestaltung einer Vorrichtung zum Sichern von Schrauben und/oder Muttern;
Fig. 5 eine weitere Ausgestaltung einer Vorrichtung zum Sichern von Schrauben und/oder Muttern;
Fig. 6 exemplarische Anordnungen von Schrauben und/oder Muttern;
Fig. 7 eine Verschraubung eines Anbauteils an ein Stahlbauteil;
Fig. 8 eine Windkraftanlage mit einer Tragstruktur.

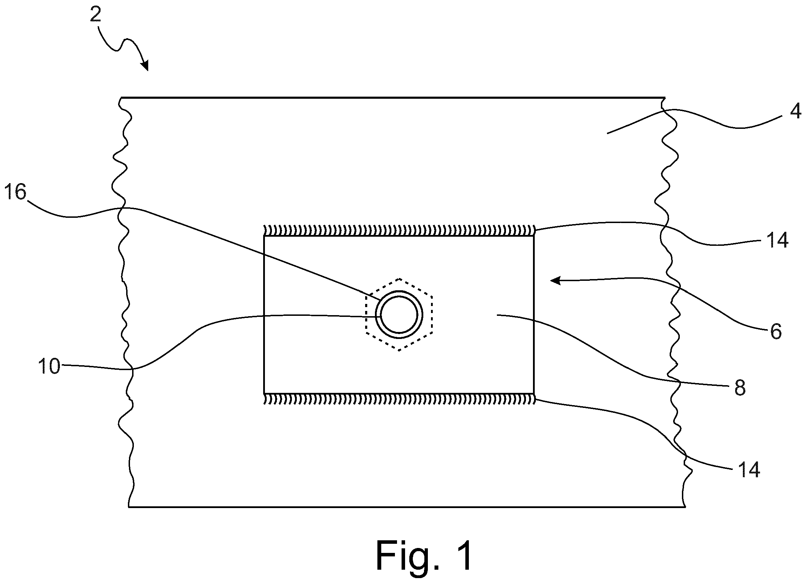

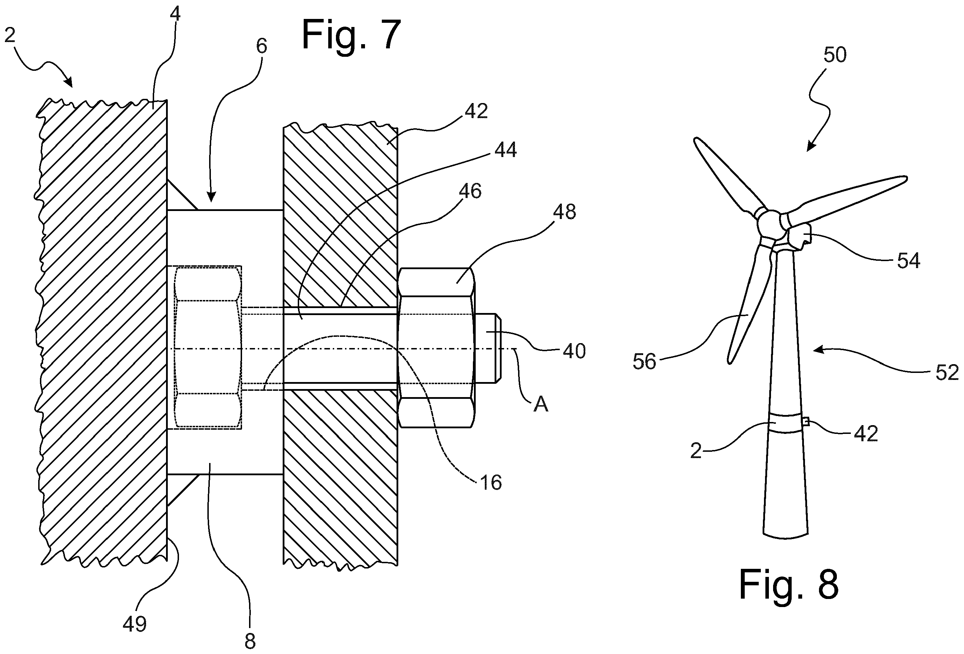

Fig. 1 zeigt einen Ausschnitt eines Stahlbauteils 2 für eine Windenergieanlage 50 (Fig. 8) in einer Frontansicht. Bei dem Stahlbauteil 2 handelt es sich beispielsweise um ein Teil einer Trag- oder Maststruktur 52 der Windenergieanlage 50, wie einem Rohrschuss oder dergleichen. Das Stahlbauteil 2 ist dazu eingerichtet ist, mit einem Anbauteil 42 der Windenergieanlage 50 verschraubt zu werden.

Das Stahlbauteil 2 hat einen Stahlgrundkörper 4. Das Stahlbauteil 2 hat eine Vorrichtung 6 zum Sichern von Schrauben und/oder Muttern. Die Vorrichtung 6 zum Sichern von Schrauben und/oder Muttern hat ein Stahlgehäuse 8. In dem Stahlgehäuse 8 ist eine Mutter 10 formschlüssig, verdrehsicher und verliersicher aufgenommen. Die Mutter 10 weist eine Festigkeitsklasse von 8.8 auf.

Das Stahlgehäuse 8 der Vorrichtung 6 zum Sichern von Schrauben und/oder Muttern ist mit dem Stahlgrundkörper 4 verschweißt. Zwischen dem Stahlgehäuse 8 und dem Stahlgrundkörper 4 sind Schweißnähte 14 gebildet. Es versteht sich, dass die Schweißnähte gemäß weiteren Ausführungsbeispielen der Erfindung den Stahlgrundkörper umfangsseitig vollständig einfassen können.

Das Stahlgehäuse weist eine Öffnung 16 auf, die zum Durchstecken eines Schraubenschafts vorgesehen ist.

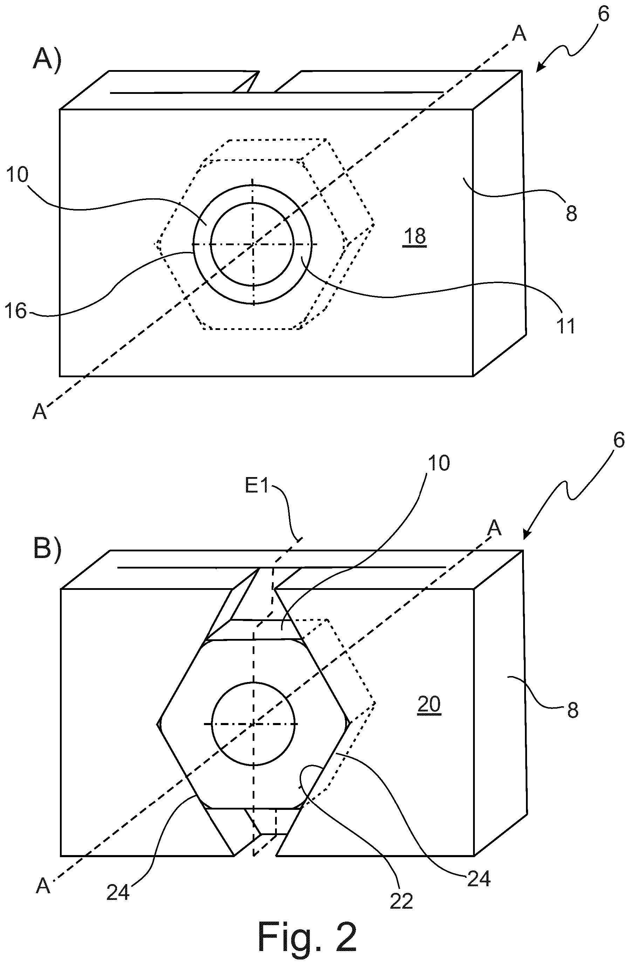

Fig. 2 zeigt die Vorrichtung 6 zum Sichern von Schrauben und/oder Muttern aus Fig. 1 in einer Frontansicht (Fig. 2A) und einer Rückansicht (Fig. 2B). Das Stahlgehäuse 8 hat eine Frontseite 18 mit der Öffnung 16 und eine Rückseite 20. In dem Stahlgehäuse 8 ist die Mutter 10 verdrehsicher und formschlüssig aufgenommen.

Die Mutter 10 ist eine Sechskantmutter mit metrischem ISO-Regelgewinde M20 und hat einen Außensechskant 22. Das Stahlgehäuse 8 weist zwei Anlageabschnitte 24 auf, die die Außenkontur 22 umfangsseitig umgreifen, so dass beim Herstellen einer Schraubenverbindung ein Drehmoment über die Außenkontur 22 gegen das Stahlgehäuse 8 abgestützt wird. Die Anlageabschnitte 24 sind spiegelsymmetrisch zu einer Mittenebene E1 angeordnet.

Das Stahlgehäuse 8 ist einstückig aus einem Stahlblech hergestellt. Die Öffnung 16 und die Anlageabschnitte 24 sind durch Laserschneiden aus dem Stahlblech herausgearbeitet worden. Anschließend ist durch Kanten des Stahlblechs die abschließende Form hergestellt worden.

Die Mutter 10 ist zur axialen Sicherung gegen ein Herausfallen aus dem Stahlgehäuse 8 kraftschlüssig zwischen den Anlageabschnitten 24 verklemmt. Auf diese Weise wird verhindert, dass die Mutter 10 vor dem Verschweißen des Stahlgehäuses 8 mit dem Stahlgrundkörper 4 axial entlang einer Achse A aus dem Stahlgehäuse 8 fällt. Dadurch, dass das Stahlgehäuse 8 die Mutter 10 zur formschlüssigen, axialen Verliersicherung wenigstens im Bereich einer der Öffnung 10 zugewandten Stirnseite 11 stirnseitig zumindest abschnittsweise umgreift, ist eine zweiseitige axiale Verliersicherung gegeben.

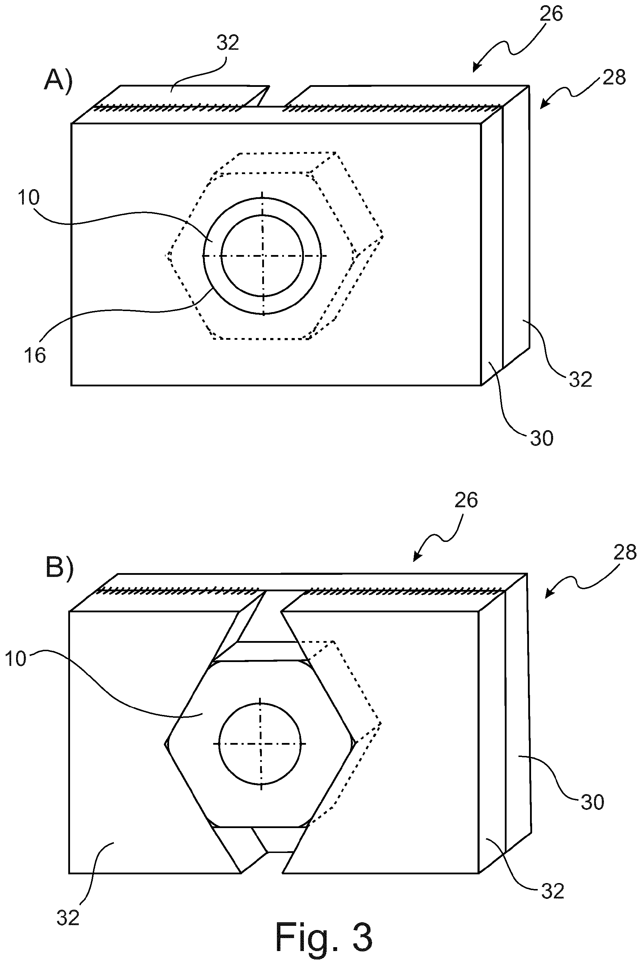

Fig. 3 zeigt eine weitere Ausgestaltung einer Vorrichtung 28 zum Sichern von Schrauben und Muttern. Ein Stahlgehäuse 26 der Vorrichtung 28 zum Sichern von Schrauben und Muttern ist gemäß Fig. 3A aus drei Teilen zusammengesetzt, dem Stahlbleche 30 und zwei Stahlblechen 32. Die Stahlbleche 30, 32 sind miteinander verschweißt.

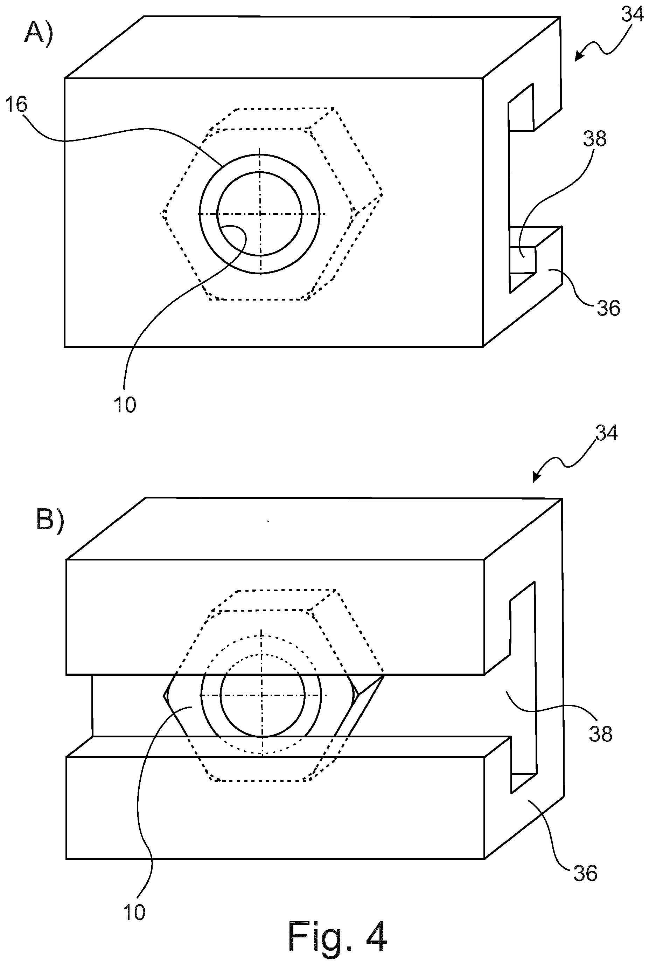

Fig. 4 zeigt eine weitere Ausgestaltung einer Vorrichtung 34 zum Sichern von Schrauben und Muttern mit einem Stahlgehäuse 36, das ein Stahlprofil mit einer Nut 38 ist. Die Mutter 10 ist in das Stahlprofil 36 eingeklebt, um eine Fixierung entlang der Nut 38 auf Höhe der Öffnung 16 zu erreichen.

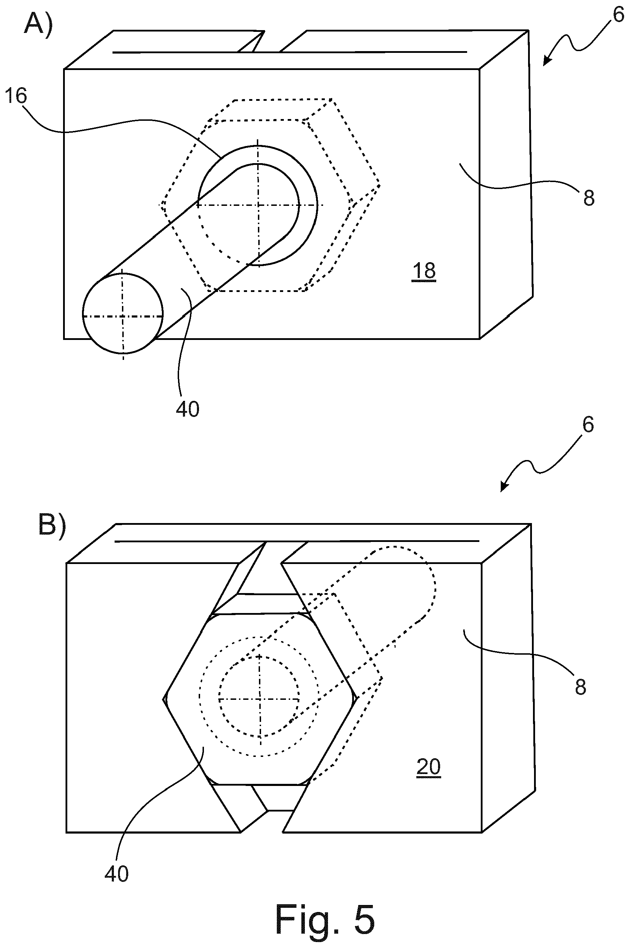

Fig. 5 zeigt eine Vorrichtung 6 zum Sichern von Schrauben und/oder Muttern entsprechend Fig. 2, wobei statt einer Mutter eine Schraube 40 in der Vorrichtung 6 aufgenommen ist und wobei es sich bei der Schraube 40 um eine Sechskantschraube handelt.

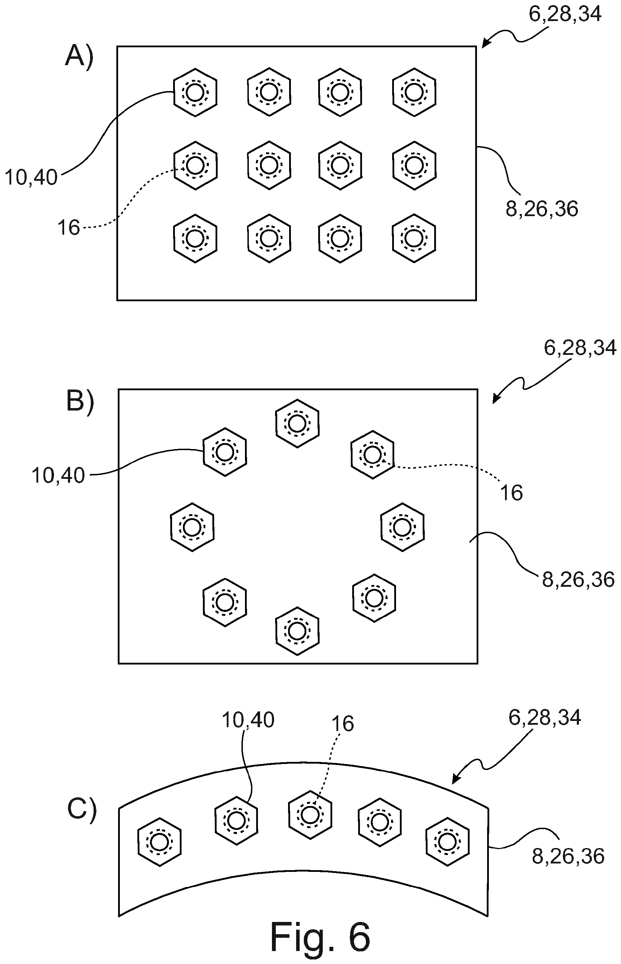

Vorrichtungen zum Sichern von Schrauben und/oder Muttern entsprechend Fig. 2 oder Fig. 6 können gemäß alternativen Ausführungsbeispielen einstückig aus einem Vollmaterial hergestellt sein, so dass kein Kanten erforderlich ist. Beispielsweise können die Öffnung und die Anlageanschnitte durch Bohren und Fräsen aus einem Stahlblock oder -zuschnitt herausgearbeitet werden.

Wie Fig. 6 zu entnehmen ist, können Vorrichtungen 6, 28, 34 zum Sichern von Schrauben 10 oder Muttern 40 Stahlgehäuse 8, 26, 36 haben, die eine Mehrzahl von Schrauben 40 und/oder Muttern 10 aufnehmen.

Fig. 6A zeigt eine gitterartige Anordnung von Schrauben 40 und/oder Muttern 10 in einem Stahlgehäuse 8, 26, 36. Fig. 6B zeigt eine kreisförmige Anordnung von Schrauben 40 und/oder Muttern 10 in einem Stahlgehäuse 8, 26, 36. Fig. 6C zeigt eine kreisbogenförmige Anordnung von Schrauben 40 und/oder Muttern 10 in einem Stahlgehäuse 8, 26, 36.

An einem Stahlbauteil 2 können eine Mehrzahl von Vorrichtungen 6, 28, 34 zum Sichern von Schrauben 40 oder Muttern 10 angeordnet sein. Ein Vorrichtung 6, 28, 34 zum Sichern von Schrauben 40 oder Muttern 10 kann einer Mehrzahl von Stahlgehäusen 8, 26, 36 aufweisen. Eine Mehrzahl von Stahlgehäusen 8, 26, 36 können mit daher dem Stahlgrundkörper 4 verschweißt sein.

Fig. 7 zeigt eine Verschraubung eines Anbauteils 42 an einem Stahlbauteil 2, wobei eine Vorrichtung 6 zum Sichern von Schrauben und/oder Muttern vorgesehen ist. Das Stahlgehäuse 8 der Vorrichtung 6 um Sichern von Schrauben und/oder Muttern ist mit dem Stahlgrundkörper 4 verschweißt. In dem Stahlgehäuse 8 ist eine Schraube 40 aufgenommen. Die Schraube 40 durchdringt mit ihrem Schaft 44 die Öffnung 16 des Stahlgehäuses 8 und ist mit ihrem Schaft 44 in einer von dem Stahlgrundkörper 4 wegweisender Richtung auskragend angeordnet. Auf diese Weise kann das Anbauteil 42 in einfacher Weise mit seiner Öffnung 46 auf die Schraube 40 aufgefädelt werden. Schließlich wird die Schraubenverbindung durch das Aufschrauben der Mutter 48 hergestellt. Vorliegend ist daher das Ausbilden einer Schraubenverbindung bei lediglich einseitiger Zugänglichkeit des Stahlbauteils 2 möglich.

Eine Schraubenlängsachse A der Schraube 40 und der Mutter 10 ist orthogonal zu einer äußeren Mantelfläche 49 des Stahlgrundkörpers 4 orientiert.

Fig. 8 zeigt eine Windkraftanlage 50 mit einer Tragstruktur 52, mit einer Gondel 54, mit einem Rotor 56, mit dem Stahlbauteil 2 und mit dem Anbauteil 42, wobei das Anbauteil 42 mit dem Stahlbauteil 2 verschraubt ist.

### Bezugszeichen

- 2: Stahlbauteil
- 4: Stahlgrundkörper
- 6: Vorrichtung zum Sichern von Schrauben und/oder Muttern
- 8: Stahlgehäuse
- 10: Mutter
- 11: Stirnseite
- 14: Schweißnähte
- 16: Öffnung
- 18: Frontseite
- 20: Rückseite
- 22: Außensechskant
- 24: Anlageabschnitte
- 26: Stahlgehäuse
- 28: Vorrichtung zum Sichern von Schrauben und/oder Muttern
- 30: Teil des Stahlgehäuses 26
- 32: Teil des Stahlgehäuses 26
- 34: Vorrichtung zum Sichern von Schrauben und/oder Muttern
- 36: Stahlgehäuse
- 38: Nut
- 40: Schraube
- 42: Anbauteil
- 44: Schaft der Schraube 40
- 46: Öffnung
- 48: Mutter
- 49: Mantelfläche
- 50: Windkraftanlage, Windenergieanlage
- 52: Tragstruktur
- 54: Gondel
- 56: Rotor
- A: Schraubenachse, Längsachse von Schraube und Mutter
- E1: Mittenebene

## Patentansprüche

1. Stahlbauteil (2) für eine Windenergieanlage (50),
- mit einem Stahlgrundkörper (4),
- mit einer Vorrichtung (6, 28, 34) zum Sichern von Schrauben (40) und/oder Muttern (10) und
- mit wenigstens einer Schraube (40) und/oder wenigstens einer Mutter (10),
- wobei die Vorrichtung (6) zum Sichern von Schrauben (40) und/oder Muttern (10) ein Stahlgehäuse (8, 26, 36) hat,
- wobei die wenigstens eine Schraube (40) und/oder die wenigstens eine Mutter (10) eine Festigkeitsklasse von 8.8 oder höher aufweist,
- wobei das Stahlbauteil (2) dazu eingerichtet ist, mit einem Anbauteil (42) der Windenergieanlage (50) verschraubt zu werden,
- wobei das Stahlgehäuse (8, 26, 36) der Vorrichtung (6, 28, 34) zum Sichern von Schrauben (40) und/oder Muttern (10) mit dem Stahlgrundkörper (4) verschweißt ist,
- wobei ein Schraubenkopf der wenigstens einen Schraube (40) und/oder die wenigstens eine Mutter (10) in dem Stahlgehäuse (8, 26, 36) formschlüssig, verdrehsicher und verliersicher aufgenommen ist und
- wobei das Stahlgehäuse (8, 26, 36) eine Öffnung (16) aufweist, die zum Durchstecken eines Schraubenschafts (44) vorgesehen ist.

2. Stahlbauteil nach Anspruch 1,
- wobei der Schraubenkopf der wenigstens einen Schraube (40) oder die wenigstens eine Mutter (10) eine Außenkontur (22) hat, wie einen Außenvierkant, einen Außensechskant oder dergleichen, und
- wobei das Stahlgehäuse (8, 26, 36) wenigstens einen Anlageabschnitt (24) aufweist, der die Außenkontur (22) umfangsseitig zumindest abschnittsweise umgreift, so dass beim Herstellen einer Schraubenverbindung ein Drehmoment über die Außenkontur (22) gegen das Stahlgehäuse (8, 26, 36) abgestützt wird.

3. Stahlbauteil nach einem der Anspruch 2,
- wobei das Stahlgehäuse (8, 26, 36) wenigstens zwei Anlageabschnitte (24) aufweist,
- wobei die Anlageabschnitte (24) insbesondere spiegelsymmetrisch zu einer Mittenebene (E1) angeordnet sind.

4. Stahlbauteil nach einem der voranstehenden Ansprüche,
- wobei das Stahlgehäuse (8, 26, 36) einstückig aus einem Stahlblech hergestellt ist, insbesondere durch Laserschneiden und anschließendes Kanten, oder
- wobei das Stahlgehäuse (8, 26, 36) aus zwei oder mehr Teilen (30, 32) zusammengesetzt ist, wobei insbesondere wenigstens zwei Bleche (30, 32) zumindest abschnittsweise stoffschlüssig miteinander verbunden sind, insbesondere miteinander verschweißt sind.

5. Stahlbauteil nach einem der Ansprüche 1 bis 3,
- wobei das Stahlgehäuse (8, 26, 36) ein Stahlprofil ist.

6. Stahlbauteil nach einem der voranstehenden Ansprüche,
- wobei ein Gewinde der wenigstens einen Schraube (40) oder der wenigstens einen Mutter (10) ein metrisches ISO-Regelgewinde oder ein metrisches ISO-Feingewinde in einem Bereich von einschließlich M16 bis M80 ist.

7. Stahlbauteil nach einem der voranstehenden Ansprüche,
- wobei das Stahlgehäuse (8, 26, 36) den Schraubenkopf oder die Mutter (10) zur formschlüssigen, axialen Verliersicherung wenigstens im Bereich einer der Öffnung zugewandten Stirnseite (11) stirnseitig zumindest abschnittsweise umgreift.

8. Stahlbauteil nach einem der voranstehenden Ansprüche,
- wobei der Schraubenkopf der wenigstens einen Schraube (40) und/oder die wenigstens eine Mutter (10) zur axialen Verliersicherung in das Stahlgehäuse (8, 26, 36) eingeklebt ist, und/oder
- wobei der Schraubenkopf der wenigstens einen Schraube (40) und/oder die wenigstens eine Mutter (10) zur axialen Verliersicherung kraftschlüssig in dem Stahlgehäuse (8, 26, 36) gehalten ist.

9. Stahlbauteil nach einem der voranstehenden Ansprüche,
- wobei eine Mehrzahl von Schrauben (40) und/oder Muttern (10) in dem Stahlgehäuse (8, 26, 36) gehalten sind,
- wobei die Schrauben (10) oder Muttern (40) insbesondere gitterartig, kreisförmig, kreisbogenförmig oder linear verteilt angeordnet sind,
und/oder
- wobei die Vorrichtung (6, 28, 34) eine Mehrzahl von Stahlgehäusen (8, 26, 36) aufweist, die mit dem Grundkörper (4) verschweißt sind,
und/oder
- wobei eine Schraubenlängsachse (A) der wenigstens einen Schraube (40) und/oder der wenigstens einen Mutter (10) orthogonal zu einer äußeren Mantelfläche (49) des Stahlgrundkörpers (4) orientiert ist.

10. Windenergieanlage (50),
- mit einer Tragstruktur (52),
- mit einer Gondel (54),
- mit einem Rotor (56),
- mit einem Stahlbauteil (2) und
- mit einem Anbauteil (42),
- wobei die Tragstruktur (52) die Gondel (54) und den Rotor (56) trägt,
- wobei das Stahlbauteil (2) nach einem der voranstehenden Ansprüche ausgebildet ist und
- wobei das Stahlbauteil (2) mit dem Anbauteil (42) verschraubt ist.
